(19) Europäisches Patentamt / European Patent Office / Office européen des brevets

(11) **EP 4 470 995 A1**

(12) **EUROPÄISCHE PATENTANMELDUNG**

(43) Veröffentlichungstag:
04.12.2024   Patentblatt 2024/49

(21) Anmeldenummer: 24167972.9

(22) Anmeldetag: **23.03.2018**

(51) Internationale Patentklassifikation (IPC):
$C04B\ 41/50^{(2006.01)}$   $C04B\ 41/00^{(2006.01)}$
$C04B\ 41/86^{(2006.01)}$   $C03C\ 8/02^{(2006.01)}$
$C03C\ 3/083^{(2006.01)}$   $C03C\ 4/00^{(2006.01)}$
$C04B\ 111/00^{(2006.01)}$   $A61C\ 13/083^{(2006.01)}$

(52) Gemeinsame Patentklassifikation (CPC):
(C-Sets verfügbar)
**C04B 41/5022; C03C 3/083; C03C 4/0021;**
**C03C 8/02; C04B 41/009; C04B 41/86;**
A61C 13/083; C03C 2205/06; C04B 2111/00836;
C04B 2201/10                                    (Forts.)

(84) Benannte Vertragsstaaten:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorität: **23.03.2017   EP 17162531**

(62) Dokumentnummer(n) der früheren Anmeldung(en)
nach Art. 76 EPÜ:
**18712229.6 / 3 601 199**

(71) Anmelder: **Ivoclar Vivadent AG
9494 Schaan (LI)**

(72) Erfinder:
• **Rothbrust, Frank
6822 Röns (AT)**
• **Hengst, Ronny
09618 Brand-Erbisdorf (DE)**
• **Krolikowski, Sebastian
8853 Lachen (CH)**
• **Ritzberger, Christian
9472 Grabs (CH)**
• **Tauch, Diana
3034 Drammen (NO)**

(74) Vertreter: **Uexküll & Stolberg
Partnerschaft von
Patent- und Rechtsanwälten mbB
Beselerstraße 4
22607 Hamburg (DE)**

Bemerkungen:
Diese Anmeldung ist am 31-03-2024 als
Teilanmeldung zu der unter INID-Code 62 erwähnten
Anmeldung eingereicht worden.

(54) **VERFAHREN ZUR HERSTELLUNG EINES GLASIERTEN KERAMISCHEN KÖRPERS**

(57)   Die Erfindung betrifft ein Verfahren zur Herstellung eines glasierten keramischen Körpers, bei dem
(a) ein Glasurmaterial auf ein nicht dichtgesintertes Substratmaterial aufgebracht wird und
(b) das Substratmaterial und das Glasurmaterial einer Wärmebehandlung in einem Temperaturbereich unterworfen werden, der sich von einer ersten Temperatur $T_1$ bis zu einer zweiten Temperatur $T_2$ erstreckt, die höher als die erste Temperatur ist, um den glasierten Körper zu erhalten,

wobei das Glasurmaterial bei der Temperatur $T_1$ eine Viskosität von mehr als $10^{2,5}$ Pa·s, insbesondere mehr als $10^{4,0}$ Pa·s, vorzugsweise mehr als $10^{5,6}$ Pa·s und besonders bevorzugt mehr als $10^{7,0}$ Pa·s, und bei der Temperatur $T_2$ eine Viskosität von weniger als $10^9$ Pa·s, insbesondere weniger als $10^7$ Pa·s und vorzugsweise weniger als $10^{5,6}$ Pa·s, aufweist.
   Die Erfindung betrifft ebenfalls die Verwendung eines Glasurmaterials zum Glasieren eines nicht dichtgesinterten Substratmaterials.

EP 4 470 995 A1

(52) Gemeinsame Patentklassifikation (CPC): (Forts.)

C-Sets
**C04B 41/009, C04B 35/00;**
**C04B 41/009, C04B 35/48;**
**C04B 41/5022, C04B 41/4539**

**Beschreibung**

Die vorliegende Erfindung betrifft ein Verfahren zum Glasieren eines noch nicht dichtgesinterten keramischen Körpers.

Zur Herstellung vollanatomischer Dentalrestaurationen werden häufig keramische Materialien wie Oxidkeramiken eingesetzt. Diese bieten eine hohe klinische Sicherheit, sind üblicherweise metallfrei, können auch bei minimalinvasiven Präparationen eingesetzt werden und sind preislich im Vergleich zu anderen metallfreien Restaurationen sehr attraktiv. Nachteilig sind jedoch die zahlreichen Arbeitsschritte, die meist zur Herstellung solcher Restaurationen erforderlich sind.

Üblicherweise werden die Restaurationen aus vorgesinterten Rohlingen herausgefräst oder geschliffen, gegebenenfalls farblich charakterisiert, durch thermische Behandlung dichtgesintert, mittels Maltechnik weiter charakterisiert und schliesslich glasiert. Dabei erfolgt das Glasieren in der Regel durch Aufbringen einer Glasur auf dichtgesinterte Restaurationen und thermische Behandlung im Temperaturbereich von 700 bis 950°C.

Daneben ist auch das Aufbringen von Verblendmaterialien auf die Oberfläche von teilgesinterten Oxidkeramiken bekannt. In diesem Fall kommt es jedoch bei der thermischen Behandlung zu einer Infiltration der Verblendmaterialien in die Keramik.

So werden in US 4,626,392 A, US 5,447,967 A und WO 99/52467 A1 Verfahren beschrieben, bei denen ein Verblendmaterial in eine Oxidkeramik eindiffundiert und mit dieser an der Oberfläche zwischen dem polykristallinen Substrat und der Verblendung ein anorganisch-anorganisches Kompositmaterial bildet.

In WO 2011/050786 A2 und US 2012/225201 A1 wird ein Haftvermittler beschrieben, der auf eine teilgesinterte Oxidkeramik aufgetragen wird und während des Sinterns in die Oberfläche eindiffundiert. Nach dem Dichtsinterschritt wird dann eine Verblendkeramik aufgetragen und erneut gesintert. Dabei stellt der Haftvermittler das Verbindungselement zwischen der Oxidkeramik und der darauf aufgesinterten Verblendkeramik dar.

Ausserdem sind in der Dentaltechnik sogenannte Infiltrationsgläser bekannt, die durch Infiltration von meist silikatischen Materialien in poröse Oxidkeramikwerkstoffe hergestellt werden, wobei es üblicherweise zur Bildung von Durchdringungsgefügen mit veränderten Eigenschaften kommt. So beschreibt WO 2008/060451 A2 sogenannte Sandwich-Strukturen, die durch Infiltration von Glaskeramikmaterialien in Substrate aus nicht endgesintertem $ZrO_2$ hergestellt werden. Zum Teil können so bestimmte Eigenschaften positiv beeinflusst werden, aber insbesondere die optischen Eigenschaften werden regelmässig beeinträchtigt.

WO 2005/070322 A1 und US 2005/164045 A1 beschreiben ein Verfahren, bei dem ein Sol bei Raumtemperatur unter Vakuum in ein Substrat infiltriert wird und anschliessend eine Dichtsinterung erfolgt.

Der Erfindung liegt daher die Aufgabe zugrunde, ein verbessertes Verfahren zur Herstellung von glasierten keramischen Körpern bereitzustellen, das die oben genannten Nachteile vermeidet und sich durch eine geringere Zahl von Verfahrensschritten auszeichnet, ohne die optischen und sonstigen physikalischen und chemischen Eigenschaften der Keramik zu beeinträchtigen.

Diese Aufgabe wird durch das Verfahren zur Herstellung eines glasierten keramischen Körpers nach den nummerierten Absätzen 1 bis 18 gelöst. Gegenstand der Erfindung ist auch die Verwendung eines Glasurmaterials zum Glasieren eines Substratmaterials nach dem nummerierten Absatz 19.

Das erfindungsgemässe Verfahren zur Herstellung eines glasierten keramischen Körpers zeichnet sich dadurch aus, dass

(a) ein Glasurmaterial auf ein nicht dichtgesintertes Substratmaterial aufgebracht wird und
(b) das Substratmaterial und das Glasurmaterial einer Wärmebehandlung in einem Temperaturbereich unterworfen werden, der sich von einer ersten Temperatur $T_1$ bis zu einer zweiten Temperatur $T_2$ erstreckt, die höher als die erste Temperatur ist, um den glasierten Körper zu erhalten,

wobei das Glasurmaterial bei der Temperatur $T_1$ eine Viskosität von mehr als $10^{2,5}$ Pa·s und bei der Temperatur $T_2$ eine Viskosität von weniger als $10^9$ Pa·s aufweist.

Bevorzugt weist das Glasurmaterial bei der Temperatur $T_1$ eine Viskosität von mehr als $10^{4,0}$ Pa·s, vorzugsweise mehr als $10^{5,6}$ Pa·s und besonders bevorzugt mehr als $10^{7,0}$ Pa·s, und bei der Temperatur $T_2$ eine Viskosität von weniger als $10^7$ Pa·s und vorzugsweise weniger als $10^{5,6}$ Pa·s auf. Besonders bevorzugt weist das Glasurmaterial bei der Temperatur $T_1$ eine Viskosität von mehr als $10^{5,6}$ Pa-s, insbesondere mehr als $10^{7,0}$ Pa·s, und bei der Temperatur $T_2$ eine Viskosität von weniger als $10^{5,6}$ Pa·s auf.

Die Bestimmung der Viskosität des Glasurmaterials kann dabei insbesondere anhand einer Viskositäts-Temperatur-Kurve auf Basis der Vogel-Furcher-Tammann-Gleichung (VFT-Gleichung)

$$log_{10}(\eta) = A + \frac{B}{T - T_0}$$

$\eta$: dynamische Viskosität bei der Temperatur T

A, B, $T_0$: stoffspezifische Konstanten

erfolgen. Diese Gleichung wird ausgehend von mindestens drei und vorzugsweise fünf Wertepaaren aus mittels Dilatometer bzw. Erhitzungsmikroskop experimentell bestimmten charakteristischen Temperaturen und den zugehörigen Viskositätswerten gelöst:

| Bezeichnung und Messmethode | $\eta$ (Pa·s) |
| --- | --- |
| $T_g$ (Glasübergangspunkt aus Dilatometer) | 12 |
| $T_d$ (Erweichungstemperatur aus Dilatometer) | 10 |
| $T_S$ (Erweichungspunkt aus Erhitzungsmikroskop) | 5,6 |
| $T_{HB}$ (Halbkugelpunkt aus Erhitzungsmikroskop) | 3,5 |
| $T_F$ (Fliesspunkt aus Erhitzungsmikroskop) | 2,1 |

Die Lösung der Gleichung erfolgt dabei durch ein Näherungsverfahren nach der Methode der kleinsten Quadrate.

Es hat sich überraschenderweise gezeigt, dass das erfindungsgemässe Verfahren ein direktes Glasieren von noch nicht dichtgesinterten Substraten erlaubt, ohne dass es dabei in signifikantem Umfang zu einem Eindringen des Glasurmaterials in das Substratmaterial kommt. Dadurch kann auf die aufwendige doppelte Wärmebehandlung zum Dichtsintern und Glasieren grundsätzlich verzichtet werden, ohne dass eine wesentliche Veränderung der Eigenschaften des Substratmaterials durch Infiltration erfolgt.

Bei dem nicht dichtgesinterten Substratmaterial handelt es sich beispielsweise um ein ungesintertes und vorzugsweise um ein vorgesintertes Substratmaterial. Üblicherweise weist das nicht dichtgesinterte Substratmaterial eine relative Dichte im Bereich von 30 bis 90%, insbesondere im Bereich von 40 bis 80% und bevorzugt im Bereich von 50 bis 70%, bezogen auf die Reindichte des Substratmaterials auf. Bevorzugt beginnt das Substratmaterial bei der Temperatur $T_1$ zu sintern. Es ist weiter bevorzugt, dass das Substratmaterial bei der Temperatur $T_2$ dichtgesintert wird. Vorzugsweise wird das Substratmaterial für eine Dauer von 5 bis 120 Minuten, insbesondere 10 bis 60 Minuten und weiter bevorzugt 20 bis 30 Minuten bei der Temperatur $T_2$ gehalten. Typischerweise weist das Substratmaterial bei der Temperatur $T_2$ eine relative Dichte von mindestens 97%, insbesondere mindestens 98%, vorzugsweise mindestens 99% und am meisten bevorzugt mindestens 99,5% bezogen auf die Reindichte des Substratmaterials auf.

Die relative Dichte ist dabei das Verhältnis der Dichte des Substratmaterials zur Reindichte des Substratmaterials.

Die Dichte des Substratmaterials kann bestimmt werden, indem dieses gewogen und sein Volumen geometrisch ermittelt wird. Die Dichte wird dann nach der bekannten Formel

```
Dichte = Masse / Volumen
```

berechnet.

Die Bestimmung der Reindichte des Substratmaterials erfolgt, indem das Substratmaterial auf ein Pulver mit einer mittleren Teilchengrösse von 10 bis 30 pm, insbesondere von 20 $\mu$m, bezogen auf die Anzahl der Teilchen, gemahlen und die Dichte des Pulvers mittels Pyknometer ermittelt wird. Die Bestimmung der Teilchengrösse kann beispielsweise mit dem CILAS® Particle Size Analyzer 1064 der Firma Quantachrome GmbH & Co. KG mittels Laserbeugung nach ISO 13320 (2009) durchgeführt werden.

In einer bevorzugten Ausführungsform weist das Glasurmaterial bei einer Temperatur $T_X$, bei der das Substratmaterial eine relative Dichte von 95% bezogen auf die Reindichte des Substratmaterials hat, eine Viskosität von mehr als $10^{2,5}$ Pa·s und vorzugsweise mehr als $10^{4,0}$ Pa·s auf. In einer besonders bevorzugten Ausführungsform weist das Glasurmaterial bei der Temperatur $T_1$ eine Viskosität von mehr als $10^{5,6}$ Pa·s und insbesondere mehr als $10^{7,0}$ Pa·s, bei der Temperatur $T_X$, bei der das Substratmaterial eine relative Dichte von 95% bezogen auf die Reindichte des Substratmaterials hat, eine Viskosität von mehr als $10^{2,5}$ Pa·s und vorzugsweise mehr als $10^{4,0}$ Pa·s und bei der Temperatur $T_2$ eine Viskosität von weniger als $10^9$ Pa·s, insbesondere weniger als $10^7$ Pa·s und vorzugsweise weniger als

$10^{5,6}$ Pa·s auf. In einer ganz besonders bevorzugten Ausführungsform weist das Glasurmaterial bei der Temperatur $T_1$ eine Viskosität von mehr als $10^{7,0}$ Pa·s, bei der Temperatur $T_X$, bei der das Substratmaterial eine relative Dichte von 95% bezogen auf die Reindichte des Substratmaterials hat, eine Viskosität von mehr als $10^{4,0}$ Pa·s, und bei der Temperatur $T_2$ eine Viskosität von weniger als $10^{5,6}$ Pa·s auf.

Das erfindungsgemässe Verfahren eignet sich für verschiedenste keramische Substratmaterialien. Beispiele für geeignete Substratmaterialien sind Oxidkeramiken, insbesondere Oxidkeramiken auf Basis von $ZrO_2$, $Al_2O_3$ oder anorganisch-anorganischen Kompositwerkstoffen, sowie Gläser und Glaskeramiken. Besonders bevorzugte Substratmaterialien sind Oxidkeramiken auf Basis von $ZrO_2$ und insbesondere auf Basis von nanoskaligem $ZrO_2$.

In einer besonders bevorzugten Ausführungsform der Erfindung umfasst das Substratmaterial mindestens zwei Schichten, die sich in ihrer chemischen Zusammensetzung und/oder insbesondere in ihrer Farbe unterscheiden.

Das in dem erfindungsgemässen Verfahren eingesetzte Glasurmaterial weist bei einer Temperatur von 950°C in der Regel eine Viskosität von mehr als $10^{2,5}$ Pa·s auf. Weiterhin weist es typischerweise bei einer Temperatur von 1300°C eine Viskosität von mehr als $10^{2,5}$ Pa·s auf. Ausserdem weist es bei einer Temperatur von 1450°C in der Regel eine Viskosität von weniger als $10^9$ Pa·s auf. Bevorzugte Glasurmaterialien zeichnen sich dadurch aus, dass sie bei einer Temperatur von 950°C eine Viskosität von mehr als $10^{4,0}$ Pa·s, vorzugsweise mehr als $10^{5,6}$ Pa·s und besonders bevorzugt mehr als $10^{7,0}$ Pa·s aufweisen, bei einer Temperatur von 1300°C eine Viskosität von mehr als $10^4$ Pa·s aufweisen und/oder bei einer Temperatur von 1450°C eine Viskosität von weniger als $10^7$ Pa·s und vorzugsweise weniger als $10^{5,6}$ Pa·s aufweisen.

Weiterhin sind Glasurmaterialien erfindungsgemäss bevorzugt, die bei einer Temperatur von 700°C eine Viskosität von mehr als $10^{2,5}$ Pa·s, bei einer Temperatur von 900°C eine Viskosität von mehr als $10^{2,5}$ Pa·s und/oder bei einer Temperatur von 1100°C eine Viskosität von weniger als $10^9$ Pa·s aufweisen. Dabei zeichnen sich besonders bevorzugte Glasurmaterialien dadurch aus, dass sie bei einer Temperatur von 700°C eine Viskosität von mehr als $10^{4,0}$ Pa·s, vorzugsweise mehr als $10^{5,6}$ Pa·s und besonders bevorzugt mehr als $10^{7,0}$ Pa·s aufweisen, bei einer Temperatur von 900°C eine Viskosität von mehr als $10^4$ Pa·s aufweisen und/oder bei einer Temperatur von 1100°C eine Viskosität von weniger als $10^7$ Pa·s und vorzugsweise weniger als $10^{5,6}$ Pa·s aufweisen.

Vorzugsweise umfasst das Glasurmaterial eine Fritte. Besonders geeignet sind Glasurmaterialien, die $SiO_2$, $Al_2O_3$ und $K_2O$ und/oder $Na_2O$ enthalten. Bevorzugt sind Glasurmaterialien, die mindestens eine und vorzugsweise alle der folgenden Komponenten in den angegebenen Mengen enthalten:

| Komponente | Gew.-% | |
|---|---|---|
| $SiO_2$ | 50,0 | bis 80,0, bevorzugt 60,0 bis 70,0 |
| $Al_2O_3$ | 10,0 | bis 30,0, bevorzugt 15,0 bis 25,0 |
| $K_2O$ | 0 | bis 20,0, bevorzugt 5,0 bis 15,0 |
| $Na_2O$ | 0 | bis 10,0, bevorzugt 0,5 bis 5,0 |
| CaO | 0 | bis 10,0, bevorzugt 0,1 bis 1,0 |
| BaO | 0 | bis 10,0, bevorzugt 0,1 bis 1,0. |

Erfindungsgemäss kann das Glasurmaterial beispielsweise in Form eines Pulvers, eines Schlickers, eines Sprays oder eines Lacks, mittels Airbrush-Verfahren oder mittels eines Transfermaterials auf das Substratmaterial aufgebracht werden. In einer Ausführungsform wird das Glasurmaterial mit einem Trägermittel, insbesondere Wasser, zu einem Schlicker angemischt, und dieser Schlicker wird beispielsweise mit Hilfe eines Pinsels auf das Substratmaterial aufgetragen. In einer bevorzugten Ausführungsform wird das Glasurmaterial üblicherweise in einem Druckbehälter mit einem geeigneten Trägermittel, insbesondere einem Treibgas, versetzt und in Form eines Sprays auf das Substratmaterial aufgebracht. In einer weiteren Ausführungsform wird das Glasurmaterial mit einem flüssigen Trägermittel, insbesondere Wasser, angemischt und mittels Airbrush-Verfahren auf das Substratmaterial aufgebracht. Alternativ kann das Glasurmaterial mittels Airbrush-Verfahren in trockener Form auf ein mit einer Flüssigkeit, insbesondere Wasser, benetztes Substratmaterial aufgebracht werden. In noch einer weiteren Ausführungsform wird das Glasurmaterial auf ein Transfermaterial, insbesondere eine Folie oder einen Klebestreifen, aufgetragen und mit dem Transfermaterial auf das Substratmaterial übertragen. Anschliessend kann das Transfermaterial abgelöst oder mittels einer Temperaturbehandlung entfernt werden.

In einer bevorzugten Ausführungsform wird das Glasurmaterial in Form einer Zusammensetzung eingesetzt, die ferner mindestens ein Trägermittel und/oder Lösungsmittel und vorzugsweise mindestens einen anorganischen und/oder organischen Füllstoff enthält.

Das erfindungsgemässe Verfahren zeichnet sich vor allem dadurch aus, dass das Glasurmaterial im Wesentlichen nicht in das Substratmaterial eindringt.

Das erfindungsgemässe Verfahren eignet sich besonders zur Herstellung von glasierten dentalen Körpern.

Daher ist es erfindungsgemäss bevorzugt, dass der glasierte keramische Körper ein glasierter dentaler Körper und insbesondere eine glasierte dentale Restauration ist. Weiterhin ist es bevorzugt, dass das nicht dichtgesinterte Substratmaterial die Form einer dentalen Restauration hat. Besonders bevorzugte dentale Restaurationen sind Brücken, Inlays, Onlays, Kronen, Veneers und Abutments.

Die Erfindung betrifft weiterhin die Verwendung eines Glasurmaterials zum Glasieren eines nicht dichtgesinterten Substratmaterials, bei dem das Glasurmaterial auf das nicht dichtgesinterte Substratmaterial aufgebracht wird und das Substratmaterial und das Glasurmaterial einer Wärmebehandlung in einem Temperaturbereich unterworfen werden, der sich von einer ersten Temperatur $T_1$ bis zu einer zweiten Temperatur $T_2$ erstreckt, die höher als die erste Temperatur ist. Vorzugsweise weist dabei das Glasurmaterial bei der Temperatur $T_1$ eine Viskosität von mehr als $10^{2,5}$ Pa·s und bei der Temperatur $T_2$ eine Viskosität von weniger als $10^9$ Pa·s auf. Bevorzugte Glasurmaterialien zeichnen sich dadurch aus, dass sie bei der Temperatur $T_1$ eine Viskosität von mehr als $10^{4,0}$ Pa·s, vorzugsweise mehr als $10^{5,6}$ Pa·s und besonders bevorzugt mehr als $10^{7,0}$ Pa·s aufweisen und/oder bei der Temperatur $T_2$ eine Viskosität von weniger als $10^7$ Pa·s und vorzugsweise weniger als $10^{5,6}$ Pa·s aufweisen. Weitere bevorzugte Ausführungsformen der erfindungsgemässen Verwendung ergeben sich aus der obigen Beschreibung des erfindungsgemässen Verfahrens.

Im Folgenden werden bevorzugte Ausführungsformen der Erfindung in Form nummerierter Absätze beschrieben:

1. Verfahren zur Herstellung eines glasierten keramischen Körpers, bei dem

    (a) ein Glasurmaterial auf ein nicht dichtgesintertes Substratmaterial aufgebracht wird und

    (b) das Substratmaterial und das Glasurmaterial einer Wärmebehandlung in einem Temperaturbereich unterworfen werden, der sich von einer ersten Temperatur $T_1$ bis zu einer zweiten Temperatur $T_2$ erstreckt, die höher als die erste Temperatur ist, um den glasierten Körper zu erhalten,

wobei das Glasurmaterial bei der Temperatur $T_1$ eine Viskosität von mehr als $10^{2,5}$ Pa·s, insbesondere mehr als $10^{4,0}$ Pa·s, vorzugsweise mehr als $10^{5,6}$ Pa·s und besonders bevorzugt mehr als $10^{7,0}$ Pa·s, und bei der Temperatur $T_2$ eine Viskosität von weniger als $10^9$ Pa·s, insbesondere weniger als $10^7$ Pa·s und vorzugsweise weniger als $10^{5,6}$ Pa·s, aufweist.

2. Verfahren nach Absatz 1, bei dem das Glasurmaterial bei der Temperatur $T_1$ eine Viskosität von mehr als $10^{5,6}$ Pa·s, insbesondere mehr als $10^{7,0}$ Pa·s, und bei der Temperatur $T_2$ eine Viskosität von weniger als $10^{5,6}$ Pa·s aufweist.

3. Verfahren nach Absatz 1 oder 2, bei dem das nicht dichtgesinterte Substratmaterial ein vorgesintertes Substratmaterial ist.

4. Verfahren nach einem der Absätze 1 bis 3, bei dem das nicht dichtgesinterte Substratmaterial eine relative Dichte im Bereich von 30 bis 90%, insbesondere im Bereich von 40 bis 80% und bevorzugt im Bereich von 50 bis 70%, bezogen auf die Reindichte des Substratmaterials aufweist.

5. Verfahren nach einem der Absätze 1 bis 4, bei dem das Substratmaterial bei der Temperatur $T_1$ zu sintern beginnt.

6. Verfahren nach einem der Absätze 1 bis 5, bei dem das Substratmaterial für eine Dauer von 5 bis 120 Minuten, insbesondere 10 bis 60 Minuten und weiter bevorzugt 20 bis 30 Minuten bei der Temperatur $T_2$ gehalten wird.

7. Verfahren nach einem der Absätze 1 bis 6, bei dem das Substratmaterial bei der Temperatur $T_2$ eine relative Dichte von mindestens 97%, insbesondere mindestens 98%, vorzugsweise mindestens 99% und am meisten bevorzugt mindestens 99,5% bezogen auf die Reindichte des Substratmaterials aufweist.

8. Verfahren nach einem der Absätze 1 bis 7, bei dem bei einer Temperatur $T_X$, bei der das Substratmaterial eine relative Dichte von 95% bezogen auf die Reindichte des Substratmaterials hat, das Glasurmaterial eine Viskosität von mehr als $10^{2,5}$ Pa·s und vorzugsweise mehr als $10^{4,0}$ Pa·s aufweist.

9. Verfahren nach einem der Absätze 1 bis 8, bei dem das Glasurmaterial bei der Temperatur $T_1$ eine Viskosität von mehr als $10^{5,6}$ Pa·s und insbesondere mehr als $10^{7,0}$ Pa·s, bei der Temperatur $T_X$, bei der das Substratmaterial eine relative Dichte von 95% bezogen auf die Reindichte des Substratmaterials hat, eine Viskosität von mehr als $10^{2,5}$ Pa·s und vorzugsweise mehr als $10^{4,0}$ Pa·s, und bei der Temperatur $T_2$ eine Viskosität von weniger als $10^9$ Pa·s, insbesondere weniger als $10^7$ Pa·s und vorzugsweise weniger als $10^{5,6}$ Pa·s aufweist.

10. Verfahren nach einem der Absätze 1 bis 9, bei dem das Substratmaterial eine Oxidkeramik, insbesondere eine Oxidkeramik auf Basis von $ZrO_2$, $Al_2O_3$ oder eines anorganisch-anorganischen Kompositwerkstoffs und besonders bevorzugt eine Oxidkeramik auf Basis von nanoskaligem $ZrO_2$, oder ein Glas oder eine Glaskeramik ist.

11. Verfahren nach einem der Absätze 1 bis 10, bei dem das Substratmaterial mindestens zwei Schichten umfasst, die sich insbesondere in ihrer Farbe unterscheiden.

12. Verfahren nach einem der Absätze 1 bis 11, bei dem das Glasurmaterial bei einer Temperatur von 950°C eine Viskosität von mehr als $10^{2,5}$ Pa·s, insbesondere mehr als $10^{4,0}$ Pa·s, vorzugsweise mehr als $10^{5,6}$ Pa·s und besonders bevorzugt mehr als $10^{7,0}$ Pa·s, bei einer Temperatur von 1300°C eine Viskosität von mehr als $10^{2,5}$ Pa·s und vorzugsweise mehr als $10^4$ Pa·s und bei einer Temperatur von 1450°C eine Viskosität von weniger als $10^9$ Pa·s, insbesondere weniger als $10^7$ Pa·s und vorzugsweise weniger als $10^{5,6}$ Pa·s, aufweist.

13. Verfahren nach einem der Absätze 1 bis 12, bei dem das Glasurmaterial bei einer Temperatur von 700°C eine Viskosität von mehr als $10^{2,5}$ Pa·s, insbesondere mehr als $10^{4,0}$ Pa·s, vorzugsweise mehr als $10^{5,6}$ Pa·s und besonders bevorzugt mehr als $10^{7,0}$ Pa·s, bei einer Temperatur von 900°C eine Viskosität von mehr als $10^{2,5}$ Pa·s und vorzugsweise mehr als $10^4$ Pa·s und bei einer Temperatur von 1100°C eine Viskosität von weniger als $10^9$ Pa·s, insbesondere weniger als $10^7$ Pa·s und vorzugsweise weniger als $10^{5,6}$ Pa·s, aufweist.

14. Verfahren nach einem der Absätze 1 bis 13, bei dem das Glasurmaterial eine Fritte umfasst, die $SiO_2$, $Al_2O_3$ und $K_2O$ und/oder $Na_2O$ enthält, und insbesondere mindestens eine und vorzugsweise alle der folgenden Komponenten in den angegebenen Mengen enthält:

| Komponente | Gew.-% | |
|---|---|---|
| $SiO_2$ | 50,0 | bis 80,0, bevorzugt 60,0 bis 70,0 |
| $Al_2O_3$ | 10,0 | bis 30,0, bevorzugt 15,0 bis 25,0 |
| $K_2O$ | 0 | bis 20,0, bevorzugt 5,0 bis 15,0 |
| $Na_2O$ | 0 | bis 10,0, bevorzugt 0,5 bis 5,0 |
| CaO | 0 | bis 10,0, bevorzugt 0,1 bis 1,0 |
| BaO | 0 | bis 10,0, bevorzugt 0,1 bis 1,0. |

15. Verfahren nach einem der Absätze 1 bis 14, bei dem das Glasurmaterial in Form eines Pulvers, eines Schlickers, eines Sprays oder eines Lacks, mittels Airbrush-Verfahren oder eingebunden in eine Folie oder einen Klebestreifen auf das Substratmaterial aufgebracht wird.

16. Verfahren nach einem der Absätze 1 bis 15, bei dem das Glasurmaterial in Form einer Zusammensetzung eingesetzt wird, die ferner mindestens ein Trägermittel und/oder Lösungsmittel und vorzugsweise mindestens einen anorganischen und/oder organischen Füllstoff enthält.

17. Verfahren nach einem der Absätze 1 bis 16, bei dem das Glasurmaterial im Wesentlichen nicht in das Substratmaterial eindringt.

18. Verfahren nach einem der Absätze 1 bis 17, bei dem der glasierte keramische Körper ein glasierter dentaler Körper, insbesondere eine glasierte dentale Restauration, und besonders bevorzugt eine Brücke, ein Inlay, ein Onlay, eine Krone, ein Veneer, eine Schale oder ein Abutment ist.

19. Verwendung eines Glasurmaterials zum Glasieren eines nicht dichtgesinterten Substratmaterials, wobei das Glasurmaterial auf das nicht dichtgesinterte Substratmaterial aufgebracht wird und das Substratmaterial und das Glasurmaterial einer Wärmebehandlung in einem Temperaturbereich unterworfen werden, der sich von einer ersten Temperatur $T_1$ bis zu einer zweiten Temperatur $T_2$ erstreckt, die höher als die erste Temperatur ist, wobei das Glasurmaterial bei der Temperatur $T_1$ eine Viskosität von mehr als $10^{2,5}$ Pa·s, insbesondere mehr als $10^{4,0}$ Pa·s, vorzugsweise mehr als $10^{5,6}$ Pa-s und besonders bevorzugt mehr als $10^{7,0}$ Pa·s, und bei der Temperatur $T_2$ eine Viskosität von weniger als $10^9$ Pa·s, insbesondere weniger als $10^7$ Pa·s und vorzugsweise weniger als $10^{5,6}$ Pa·s, aufweist.

Die Erfindung wird im Folgenden anhand von Ausführungsbeispielen näher erläutert.

## Beispiele

### Beispiele 1A-B

*Herstellung der Glasurmaterialien*

Es wurden zwei verschiedene Gläser mit den in Tabelle I angegebenen Zusammensetzungen als erfindungsgemässe Glasurmaterialien hergestellt.

Tabelle I

| Beispiel | 1A | 1B |
|---|---|---|
| Komponente | Gew.-% | Gew.-% |
| $SiO_2$ | 65,41 | 73,39 |
| $K_2O$ | 11, 62 | 10,25 |
| $Na_2O$ | 2,25 | 1,98 |

(fortgesetzt)

| Beispiel | 1A | 1B |
|---|---|---|
| Komponente | Gew.-% | Gew.-% |
| $Al_2O_3$ | 20,72 | 14,38 |
| Summe | 100,00 | 100,00 |

Dazu wurden zunächst die Rohstoffe Quarzpulver ($SiO_2$), Kaliumcarbonat ($K_2CO_3$), Natriumcarbonat ($Na_2CO_3$) und Aluminiumoxyhydroxyhydrat ($AlO(OH) \times H_2O$) im 200 g Massstab mittels eines Turbula-Mischers für 30 min gründlich vermischt.

Aus den homogenen Gemengen wurden mittels einer hydraulischen Presse uniaxial mit einem Pressdruck von 3 MPa etwa 25 g schwere zylindrische Presslinge mit einem Durchmesser von etwa 40 mm hergestellt. Diese Presslinge wurden auf einer Quarzschale in einem Ofen innerhalb von 6 h auf 1000°C aufgeheizt und für weitere 6 h auf dieser Temperatur gehalten. Nach dem Abkühlen im Ofen wurden die Presslinge mittels eines Backenbrechers auf eine Grösse von etwa 1,5 mm zerkleinert und anschliessend in einer Mörsermühle (Retsch R200) für 15 min aufgemahlen.

Das kalzinierte Gemenge wurde mittels einer hydraulischen Presse mit einem Pressdruck von 3 MPa zu Presslingen mit einem Durchmesser von etwa 40 mm verpresst. Diese Presslinge wurden auf einer Quarzschale in einem Ofen innerhalb von 6 h auf 1150°C aufgeheizt und für weitere 6 h auf dieser Temperatur gehalten. Nach dem Abkühlen im Ofen wurden die Presslinge mittels eines Backenbrechers auf eine Grösse von etwa 1,5 mm zerkleinert und anschliessend in einer Mörsermühle (Retsch R200) für 15 min aufgemahlen.

Aus dem kalzinierten Gemenge wurden mittels einer Handpresse etwa 40 g schwere Temperkuchen hergestellt und auf Quarzschalen mit wenig Quarzpulver als Trennmittel bei ca. 1000°C in den heissen Ofen (Nabertherm HT16/17) gestellt. Anschliessend wurden die Temperkuchen mit 10 K/min auf 1450°C (Beispiel 1A) bzw. 1400°C (Beispiel 1B) geheizt und für 1,5 h auf dieser Temperatur gehalten. Nach Ablauf der Haltezeit wurden die Temperkuchen für etwa 2 min an Luft abgekühlt und danach im Wasserbad abgeschreckt. Die so erhaltenen Rohlinge wurden mittels eines Backenbrechers auf eine Grösse von etwa 1,5 mm zerkleinert und anschliessend in einer Mörsermühle (Retsch R200) für 15 min aufgemahlen.

**Beispiele 2A-B**

*Bestimmung der Viskositätseigenschaften der Glasurmaterialien*

Zur Bestimmung der Viskositätseigenschaften der in den Beispielen 1A-B erhaltenen Glasurmaterialien in Abhängigkeit von der Temperatur wurde eine Viskositäts-Temperatur-Kurve auf Basis der Vogel-Furcher-Tammann-Gleichung (VFT-Gleichung) berechnet:

$$log_{10}(\eta) = A + \frac{B}{T - T_0}$$

η: dynamische Viskosität bei der Temperatur T
A, B, $T_0$: stoffspezifische Konstanten

Hierzu wurden mittels Dilatometer bzw. Erhitzungsmikroskop mindestens drei der folgenden charakteristischen Temperaturen experimentell bestimmt:

| *Bezeichnung und Messmethode* | *η (Pa·s)* |
|---|---|
| $T_g$ (Glasübergangspunkt aus Dilatometer) | 12 |
| $T_d$ (Erweichungstemperatur aus Dilatometer) | 10 |
| $T_S$ (Erweichungspunkt aus Erhitzungsmikroskop) | 5,6 |
| $T_{HB}$ (Halbkugelpunkt aus Erhitzungsmikroskop) | 3,5 |
| $T_F$ (Fliesspunkt aus Erhitzungsmikroskop) | 2,1 |

Dabei wurden die Temperaturen $T_g$ und $T_d$ mittels eines Dilatometers (Bähr-Thermoanalyse GmbH) mit Quarzglas-Schubstange und Halter bestimmt. Das zu untersuchende Material wurde mit einer Heizrate von 5 K/min bis zum Erweichungspunkt (maximal 1000°C) erhitzt. Während der Messung wurde der Aufbau mit Stickstoff gespült.

Die Temperaturen $T_S$, $T_{HB}$ und $T_F$ wurden mittels eines Erhitzungsmikroskops (Hesse Instruments mit EMA I Software) bestimmt. Das zu untersuchende Material wurde in einem Rohrofen mit einer Heizrate von 10 K/min erhitzt. Dabei ermittelt die Software automatisch die charakteristischen Formänderungen der Probe und weist ihnen die entsprechende Temperatur zu.

Ausgehend von den Wertepaaren aus den experimentell bestimmten charakteristischen Temperaturen und den oben angegebenen zugehörigen Viskositätswerten wurde die VFT-Gleichung durch ein Näherungsverfahren nach der Methode der kleinsten Quadrate mit Hilfe der Solver-Funktion der Software Microsoft Excel 2016 MSO (16.0.4456.1003) 32-Bit gelöst.

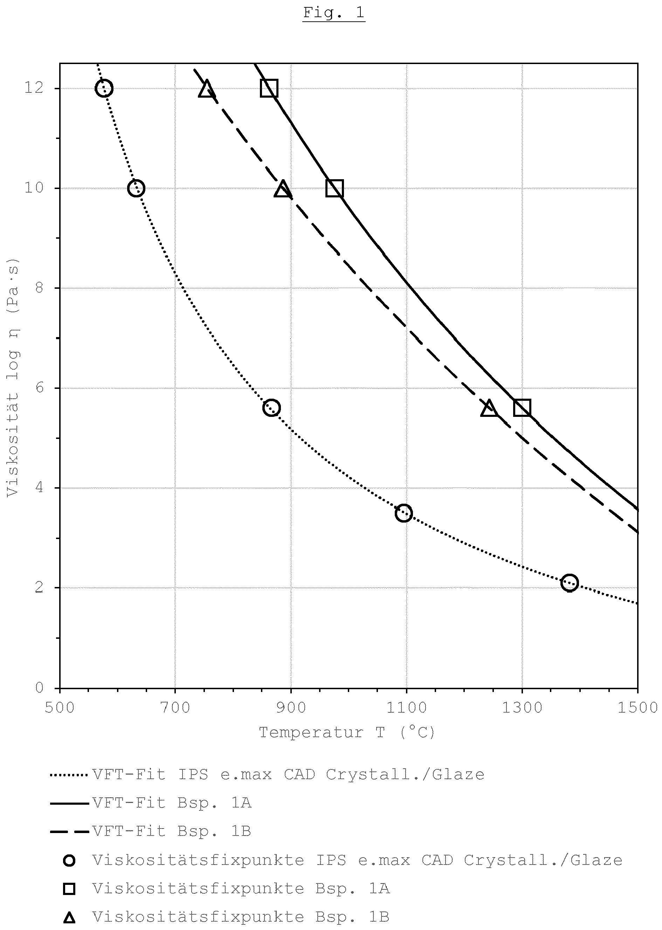

Die so bestimmten Viskositäts-Temperatur-Kurven für die in den Beispielen 1A-B erhaltenen Glasurmaterialien sind in Fig. 1 gezeigt. Zum Vergleich zeigt diese auch eine analog bestimmte Viskositäts-Temperatur-Kurve für ein kommerziell erhältliches Glasurmaterial (IPS e.max CAD Crystall./Glaze Spray, Ivoclar Vivadent AG).

### Beispiele 3A-B

*Verwendung der Glasurmaterialien zum Glasieren*

Aus kommerziell erhältlichen Rohlingen aus vorgesintertem $ZrO_2$ (IPS e.max ZirCAD MO 0, Ivoclar Vivadent AG) wurden Plättchen (19 mm $\times$ 15,4 mm $\times$ 1,5 mm) gesägt und diese ohne weitere thermische Vorbehandlung als Substratmaterial eingesetzt. Auf diese Plättchen wurden mittels Airbrushverfahren unter Verwendung einer Sprühpistole (VITA SPRAY-ON, Vita Zahnfabrik) bei einem Arbeitsdruck von ca. 1 bar aus einer Entfernung von ca. 10 cm wässrige Suspensionen der in den Beispielen 1A-B hergestellten Glasurmaterialien A und B aufgesprüht und nach Trocknung an Luft für 30 min in einem Ofen (Sintramat S1 1600, Ivoclar Vivadent AG, Programm P1) innerhalb von 70 min dichtgesintert und gleichzeitig glasiert.

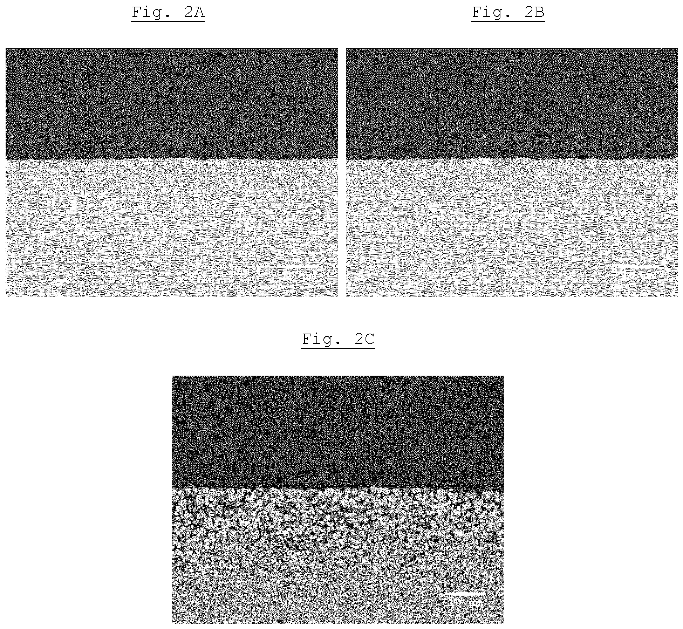

Nach dem Sintern wurden die glasierten $ZrO_2$-Plättchen in ein Zweikomponenten-Harz (EpoKwick Epoxy Resin/EpoKwick Epoxy Hardener 10:2, Buehler) eingebettet, an der Grenzfläche bis zur optischen Qualität poliert (Apex Diamond Grinding Discs, Buehler, Körnung bis 0,5 $\mu$m) und anschliessend mittels Rasterelektronenmikroskopie (REM, rückgestreute Elektronen) untersucht. Die Ergebnisse sind in Fig. 2A (Beispiel 3A) und Fig. 2B (Beispiel 3B) gezeigt. Die Ergebnisse zeigen, dass die erfindungsgemässen Glasurmaterialien nicht in nennenswertem Masse in das Substratmaterial infiltriert sind.

### Beispiel 3C (Vergleich)

*Verwendung eines kommerziellen Glasurmaterialies zum Glasieren*

Analog zu den Beispielen 3A-B wurden Plättchen aus kommerziell erhältlichen Rohlingen aus vorgesintertem $ZrO_2$ (IPS e.max ZirCAD MO 0, Ivoclar Vivadent AG) gesägt. Auf diese Plättchen wurde mittels Airbrushverfahren unter Verwendung einer Sprühpistole (VITA SPRAY-ON, Vita Zahnfabrik) bei einem Arbeitsdruck von ca. 1 bar aus einer Entfernung von ca. 10 cm eine wässrige Suspension eines kommerziell erhältlichen Glasurmaterials (IPS e.max CAD Crystall./Glaze Spray, Ivoclar Vivadent AG) aufgesprüht und nach Trocknung an Luft für 30 min in einem Ofen (Sintramat S1 1600, Ivoclar Vivadent AG, Programm P1) innerhalb von 70 min dichtgesintert und gleichzeitig glasiert.

Nach dem Sintern wurden die glasierten $ZrO_2$-Plättchen in ein Zweikomponenten-Harz (EpoKwick Epoxy Resin/EpoKwick Epoxy Hardener 10:2, Buehler) eingebettet, an der Grenzfläche bis zur optischen Qualität poliert (Apex Diamond Grinding Discs, Buehler, Körnung bis 0,5 $\mu$m) und anschliessend mittels Rasterelektronenmikroskopie (REM, rückgestreute Elektronen) untersucht. Die Ergebnisse sind in Fig. 2C gezeigt. Diese Ergebnisse zeigen, dass das kommerzielle Glasurmaterial in erheblichem Umfang in das Substratmaterial infiltriert ist.

### Beispiel 4

*Einfluss der relativen Dichte auf die Infiltrationstiefe*

Aus kommerziell erhältlichen Rohlingen aus vorgesintertem $ZrO_2$ (IPS e.max ZirCAD MO 0, Ivoclar Vivadent AG) wurden Plättchen (19 mm $\times$ 15,4 mm $\times$ 1,5 mm) gesägt und diese durch thermische Behandlung auf eine relative Dichte von 50%, 85%, 90% bzw. 99,7%, jeweils bezogen auf die Reindichte des Substratmaterials, vorgesintert. Auf diese Plättchen wurde mittels Airbrushverfahren unter Verwendung einer Sprühpistole (VITA SPRAY-ON, Vita Zahnfabrik) bei einem Arbeitsdruck von ca. 1 bar aus einer Entfernung von ca. 10 cm eine wässrige Suspension des in Beispiel 1A hergestellten Glasurmaterials A aufgesprüht und nach Trocknung an Luft für 30 min in einem Ofen (Sintramat S1 1600, Ivoclar Vivadent AG, Programm P7) innerhalb von 70 min dichtgesintert und gleichzeitig glasiert.

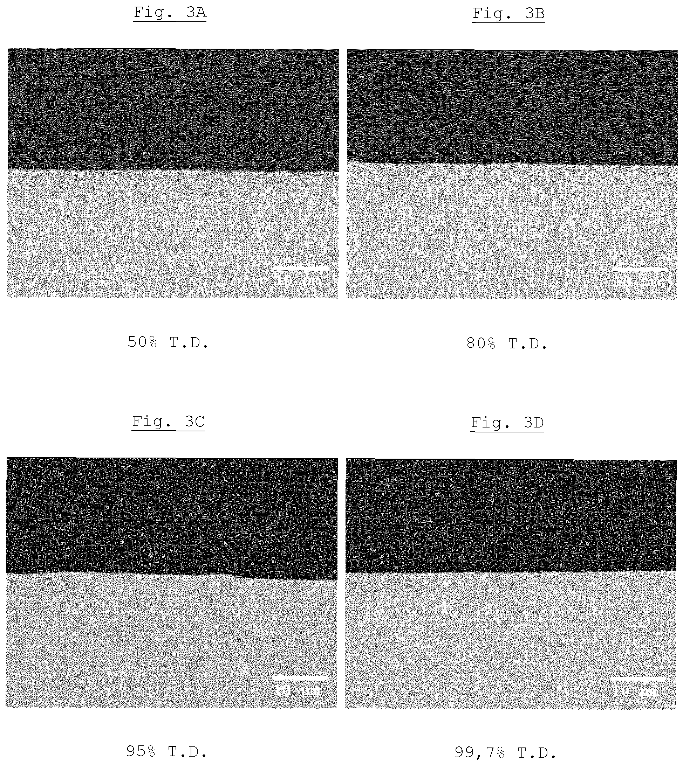

Nach dem Sintern wurden die glasierten $ZrO_2$-Plättchen in ein Zweikomponenten-Harz (EpoKwick Epoxy Resin/EpoKwick Epoxy Hardener 10:2, Buehler) eingebettet, an der Grenzfläche bis zur optischen Qualität poliert (Apex Diamond Grinding Discs, Buehler, Körnung bis 0,5 $\mu$m) und anschliessend mittels Rasterelektronenmikroskopie (REM, rückgestreute Elektronen) und energiedispersiver Röntgenspektroskopie (EDX) untersucht. Die Ergebnisse sind in Fig. 3A-D gezeigt. Daraus erkennt man, dass die Infiltrationstiefe des erfindungsgemässen Glasurmaterials weitgehend unabhängig von der relativen Dichte und damit von der Restporosität des Substratmaterials ist.

## Patentansprüche

1. Glasurmaterial zur Herstellung eines glasierten keramischen Körpers, wobei das Glasurmaterial bei einer ersten Temperatur $T_1$ eine Viskosität von mehr als $10^{2,5}$ Pa·s, insbesondere mehr als $10^{4,0}$ Pa·s, vorzugsweise mehr als $10^{5,6}$ Pa·s und besonders bevorzugt mehr als $10^{7,0}$ Pa·s, und bei einer zweiten Temperatur $T_2$, die höher als die erste Temperatur ist, eine Viskosität von weniger als $10^9$ Pa·s, insbesondere weniger als $10^7$ Pa·s und vorzugsweise weniger als $10^{5,6}$ Pa·s, aufweist.

2. Glasurmaterial nach Anspruch 1, wobei das Glasurmaterial bei einer Temperatur von 950°C eine Viskosität von mehr als $10^{2,5}$ Pa·s, insbesondere mehr als $10^{4,0}$ Pa·s, vorzugsweise mehr als $10^{5,6}$ Pa·s und besonders bevorzugt mehr als $10^{7,0}$ Pa·s, bei einer Temperatur von 1300°C eine Viskosität von mehr als $10^{2,5}$ Pa·s und vorzugsweise mehr als $10^4$ Pa·s und bei einer Temperatur von 1450°C eine Viskosität von weniger als $10^9$ Pa·s, insbesondere weniger als $10^7$ Pa·s und vorzugsweise weniger als $10^{5,6}$ Pa·s, aufweist.

3. Glasurmaterial nach Anspruch 2, wobei das Glasurmaterial bei einer Temperatur von 950°C eine Viskosität von mehr als $10^{7,0}$ Pa·s, bei einer Temperatur von 1300°C eine Viskosität von mehr als $10^4$ Pa·s und bei einer Temperatur von 1450°C eine Viskosität von weniger als $10^9$ Pa·s, insbesondere weniger als $10^7$ Pa·s und vorzugsweise weniger als $10^{5,6}$ Pa·s, aufweist.

4. Glasurmaterial nach einem der Ansprüche 1 bis 3, wobei das Glasurmaterial bei einer Temperatur von 700°C eine Viskosität von mehr als $10^{2,5}$ Pa·s, insbesondere mehr als $10^{4,0}$ Pa·s, vorzugsweise mehr als $10^{5,6}$ Pa·s und besonders bevorzugt mehr als $10^{7,0}$ Pa·s, bei einer Temperatur von 900°C eine Viskosität von mehr als $10^{2,5}$ Pa·s und vorzugsweise mehr als $10^4$ Pa·s und bei einer Temperatur von 1100°C eine Viskosität von weniger als $10^9$ Pa·s, insbesondere weniger als $10^7$ Pa·s und vorzugsweise weniger als $10^{5,6}$ Pa·s, aufweist.

5. Glasurmaterial nach Anspruch 4, wobei das Glasurmaterial bei einer Temperatur von 700°C eine Viskosität von mehr als $10^{7,0}$ Pa·s, bei einer Temperatur von 900°C eine Viskosität von mehr als $10^4$ Pa·s und bei einer Temperatur von 1100°C eine Viskosität von weniger als $10^9$ Pa·s, insbesondere weniger als $10^7$ Pa·s und vorzugsweise weniger als $10^{5,6}$ Pa·s, aufweist.

6. Glasurmaterial nach einem der Ansprüche 1 bis 5, wobei das Glasurmaterial eine Fritte umfasst.

7. Glasurmaterial nach einem der Ansprüche 1 bis 6, wobei das Glasurmaterial $SiO_2$, $Al_2O_3$ und $K_2O$ und/oder $Na_2O$ enthält.

8. Glasurmaterial nach einem der Ansprüche 1 bis 7, wobei das Glasurmaterial mindestens eine und vorzugsweise alle der folgenden Komponenten in den angegebenen Mengen enthält:

| Komponente | Gew.-% | |
| --- | --- | --- |
| $SiO_2$ | 50,0 | bis 80,0, bevorzugt 60,0 bis 70,0 |
| $Al_2O_3$ | 10,0 | bis 30,0, bevorzugt 15,0 bis 25,0 |
| $K_2O$ | 0 | bis 20,0, bevorzugt 5,0 bis 15,0 |
| $Na_2O$ | 0 | bis 10,0, bevorzugt 0,5 bis 5,0 |
| CaO | 0 | bis 10,0, bevorzugt 0,1 bis 1,0 |
| BaO | 0 | bis 10,0, bevorzugt 0,1 bis 1,0. |

9. Glasurmaterial nach einem der Ansprüche 1 bis 8, wobei das Glasurmaterial in Form eines Pulvers, eines Schlickers, eines Sprays oder eines Lacks, mittels Airbrush-Verfahren oder eingebunden in eine Folie oder einen Klebestreifen vorliegt.

10. Zusammensetzung, die das Glasurmaterial nach einem der Ansprüche 1 bis 9 und ferner mindestens ein Trägermittel und/oder Lösungsmittel und vorzugsweise mindestens einen anorganischen und/oder organischen Füllstoff enthält.

Fig. 1

......... VFT-Fit IPS e.max CAD Crystall./Glaze

———— VFT-Fit Bsp. 1A

— — VFT-Fit Bsp. 1B

O Viskositätsfixpunkte IPS e.max CAD Crystall./Glaze

□ Viskositätsfixpunkte Bsp. 1A

△ Viskositätsfixpunkte Bsp. 1B

Fig. 2A

Fig. 2B

Fig. 2C

Fig. 3A

50% T.D.

Fig. 3B

80% T.D.

Fig. 3C

95% T.D.

Fig. 3D

99,7% T.D.

Europäisches
Patentamt

European
Patent Office

Office européen
des brevets

## EUROPÄISCHER RECHERCHENBERICHT

**Nummer der Anmeldung**

EP 24 16 7972

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 21 05 822 A1 (SCM CORP) 24. August 1972 (1972-08-24) * Ansprüche * * Beispiele * * Seite 14, letzter Absatz * * Seite 16, letzter Absatz * ----- | 1-10 | INV. C04B41/50 C04B41/00 C04B41/86 C03C8/02 C03C3/083 C03C4/00 |
| X,D | WO 2008/060451 A2 (UNIV NEW YORK [US]; ZHANG YU [US]; KIM JAE-WON [US]) 22. Mai 2008 (2008-05-22) * Ansprüche; Beispiele * ----- | 1-10 | ADD. C04B111/00 A61C13/083 |

**RECHERCHIERTE SACHGEBIETE (IPC)**

C04B
C03C
A61C

Der vorliegende Recherchenbericht wurde für alle Patentansprüche erstellt

| Recherchenort | Abschlußdatum der Recherche | Prüfer |
|---|---|---|
| München | 9. Oktober 2024 | Bonneau, Sébastien |

KATEGORIE DER GENANNTEN DOKUMENTE

X : von besonderer Bedeutung allein betrachtet
Y : von besonderer Bedeutung in Verbindung mit einer
anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
nach dem Anmeldedatum veröffentlicht worden ist
D : in der Anmeldung angeführtes Dokument
L : aus anderen Gründen angeführtes Dokument

..............................................................................

& : Mitglied der gleichen Patentfamilie, übereinstimmendes
Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 24 16 7972

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

09-10-2024

| Im Recherchenbericht angeführtes Patentdokument | Datum der Veröffentlichung | Mitglied(er) der Patentfamilie | Datum der Veröffentlichung |
|---|---|---|---|
| DE 2105822 A1 | 24-08-1972 | KEINE | |
| WO 2008060451 A2 | 22-05-2008 | EP 2083744 A2 | 05-08-2009 |
| | | JP 2010509336 A | 25-03-2010 |
| | | US 2008241551 A1 | 02-10-2008 |
| | | US 2011070452 A1 | 24-03-2011 |
| | | WO 2008060451 A2 | 22-05-2008 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 4626392 A
- US 5447967 A
- WO 9952467 A1
- WO 2011050786 A2
- US 2012225201 A1
- WO 2008060451 A2
- WO 2005070322 A1
- US 2005164045 A1